# EUROPEAN PATENT SPECIFICATION

(11) **EP 0 501 156 B1**
(45) Date of publication and mention of the grant of the patent: **05.04.1995**
(21) Application number: 92101425.4
(22) Date of filing: 29.01.1992
(51) Int. Cl.: C08L 71/12, C08L 83/04

(54) **Method for enhancing the flame retardance of polyphenylene ethers**
Verfahren zur Förderung der Flammverzögerung von Polyphenylenäther
Méthode d'avancement à retardement de la flamme de poly(éther de phénylène)

(30) Priority: 25.02.1991 US 659819
(43) Date of publication of application: 02.09.1992
(73) Proprietor: GENERAL ELECTRIC COMPANY, Schenectady New York 12305 (US)
(72) Inventor: Snow, Mitchell Kevin, Mt. Vernon Indiana 47620 (US); Davis, Gary Charles, Albany, New York 12205 (US); Lee, Gim Fun, Jr., Albany, New York 12203 (US)
(74) Representative: Pratt, Richard Wilson

(56) References cited:
- EP-A- 0 369 169
- FR-A- 2 104 541
- US-A- 3 063 872

## Description

### Background of the Invention

The present invention relates to a method of improving the thermal properties of polyphenylene ether, by blending the polyphenylene ether with a siloxane fluid having a critical mole % of chemically combined phenylsiloxane units. More particularly, the polyphenylene ether-phenylsiloxane fluid blends provided by the method of the present invention, have been found to possess a reduction in both peak smoke release rate and total smoke when tested in accordance with ASTM E906-83.

Prior to the present invention, as shown by Haaf, U.S. Patent 3,737,479, thermoplastic compositions are provided of polyorganosiloxane and polyphenylene ether having improved drop-weight impact resistance. Lovgren et al, U.S. Patents 4,446,090 and 4,487,858, show that high viscosity silicone fluids have been blended with thermoplastic polymers to produce flame retardant thermoplastic materials.

In U.S. Patent 5,204,438 there is described thermoplastic flame retardant silicone-polyphenylene ether graft copolymers resulting from the oxidative coupling of certain phenylsiloxane macromers and 2,6-diorganophenol. It was found that in addition to being a flame retardant high performance thermoplastic, the silicone-polyphenylene ether graft copolymer also produced about a 30% by weight of intumescent residue upon termination of burning. The residue remaining after combustion is sometimes referred to as "char yield". Char yield can be measured by the burning of a 12.7mm x 19.05mm x 1.59mm (l/2" x 3/4" x l/l6th") molded sample of polymer after it has been placed 5.08cm (2 inches) from a radiant heat panel having a 4.4 watts/cm² heat flux. A desirable char is a char which intumesces or swells, since the char can provide an insulating layer between the heat of the flame and the substrate and behave as a mechanical shield to reduce smoke evolution.

### Summary of the Invention

The present invention is based on the discovery that a phenylsiloxane fluid having a critical mole % range of chemically combined diphenylsiloxy units, or methylphenylsiloxy units, or a mixture thereof, as defined below, can reduce the peak smoke release rate (PSRR) and total smoke (STOT) of polyphenylene ethers, if about 2-l5 parts by weight of the phenylsiloxane fluid is incorporated into about l00 parts by weight of the polyphenylene ether. Suprisingly, it has been found that if a molded sample of the polyphenylene ether-phenylsiloxane blend is tested under appropriate conditions to measure its char yield as previously defined, the resulting char intumesces or swells forming a mechanical shield which serves as a thermal insulating barrier to reduce smoke evolution.

### Statement of the Invention

There is provided by the present invention, a method of reducing peak smoke release rate and total smoke of a polyphenylene ether, which comprises blending the polyphenylene ether with 2-l5 parts by weight of a phenylsiloxane fluid, per l00 parts of polyphenylene ether, where the phenylsiloxane fluid has a weight average molecular weight in the range of from about 800 to l00,000 and consists essentially of chemically combined units of the formula,

(a) (C₆H₅)₂SiO

(b) CH₃(C₆H₅)SiO

(c) (CH₃)₂SiO

where there is present in the phenylsiloxane fluid from 20 to 40 mole % of (a), or 40 to 80 mole % of (b), or 21 to 79 mole % of the sum of (a) + (b), based on the total moles of (a), (b), and (c).

Some of the polyphenylene ethers which can be used in the practice of the present invention have condensed units of the formula, 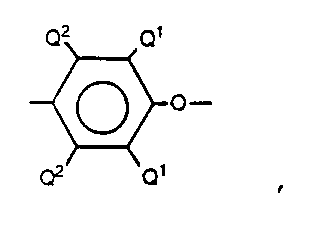
wherein in each of said units independently, each Q¹ is independently halogen, primary or secondary lower alkyl (i.e. alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-,3- or 4-methylpentyl and the corresponding heptyl groups. Examples of secondary lower alkyl groups are isopropyl, sec-butyl and 3-pentyl. Most often, each Q¹ is alkyl or phenyl, especially Cₗ₋₄ alkyl, and each Q² is hydrogen.

Both homopolymer and copolymer polyphenylene ethers are included. Suitable homopolymers are those containing, for example, 2,6-dimethyl-l,4-phenylene ether units. Suitable copolymers include random copolymers containing such units in combination with (for example) 2,3,6-trimethyl-l,4-phenylene ether units.

Also included are the coupled polyphenylene ethers in which the coupling agent is reacted in a known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ethers generally have a number average molecular weight within the range of about 3,000-40,000 and weight average molecular weight within the range of about 20,000-80,000, as determined by gel permeation chromatography. Their intrinsic viscosities are most often in the range of about 0.35-0.6 dl/g, as measured in chloroform at 25°C.

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-l,4-phenylene ether), and 2,3,6-trimethylphenol (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Pat. Nos. 3,306,874, 3,306,875, 3,9l4,266 and 4,028,34l. They are usually combinations of cuprous or cupric ions, halide (i.e., chloride, bromide or iodide) ions.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as o-hydroxyaryl oximes and β-diketones. Also useful are known cobalt-containing catalyst systems.

The phenylsiloxane fluids can have a MW of up to l00,000 and preferably 800 to 5,000. These fluids can be blended with polyphenylene ether to make the flame retardant blends of the present invention. These phenylsiloxanes are well known materials and are shown in the Encyclopedia of Polymer Science and Engineering, Vol. l5, pages 258-264, John Wylie and Sons, New York (l989). For example, the phenylsiloxane fluids of the present invention can be made by initially equilibrating dimethyl silicone stock (hydrolysate or distilled cyclic compounds) and a source of chain terminator, such as a trimethylsiloxy unit. Siloxy units having phenyl substituents can be introduced as diphenylsiloxane or methylphenylsiloxane. In most instances, the equilibrated fluid is devolatilized by heat and vacuum after catalyst deactivation. Phenyl substitution, for example, methylphenylsiloxy units which are equilibrated into the dimethylsiloxane backbone, has been found to increase the thermal and oxidative stability of the resulting polydiorganosiloxane. Copolymers of dimethylsiloxane with some methylphenylsiloxane have been found to have lower pour points because the bulky groups interfere with crystallization of the methyl polymer.

The flame retardant blends of polyphenylene ether and phenylsiloxane fluids can be made by roller mixing or stirring the ingredients and thereafter melt extruding the blend to the moldable state. Compression molding of the ingredients also can be used.

If desired, inert filler materials, such as titanium dioxide, silica, glass fiber, silicon carbide whiskers, carbon fibers, clay, talc, mica and calcium carbonate can be incorporated with the polyphenylene ether and phenylsiloxane fluid during the initial blending process. The fillers can be utilized at from about 1 to 50 parts by weight of filler, per l00 parts of the polyphenylene ether/phenylsiloxane fluid blend.

In order that those skilled in the art will be better able to practice the present invention, the following examples are given by way of illustration and not by way of limitation. All parts are by weight.

### Example l

Blends of commercially available phenylsiloxanes and commercially available polyphenylene ether containing 2,6-dimethyl-l,4-phenylene ether units were made by directly adding the phenylsiloxane to predried polyphenylene ether powder in a sealed container. The mixture was roll-mixed for l-2 hours with the aid of ceramic balls. The phenylsiloxane fluids which were used are shown in table 1, where "Ø" is phenyl, "Me" is methyl, D is the average number of condensed diorganosiloxy units, "Term" are the terminal units and "TMS" is trimethylsiloxy,

**TABLE 1**

| Phenyl-Siloxane Fluid | Fluid Structures (est. mole ratio) | Visc cm²/s (cSt) | 〈M_{w}〉 | 〈Mₙ〉 | D | Term. |
|---|---|---|---|---|---|---|
| * 1 | 100 Ø₂ | 10-14 (1000-1400) | 1600 | 750 | 2.1 | hydroxy |
| 2^{a} | 40 Ø₂:60 Me₂ | 4-6 (400-600) | 1600 | 400 | 4.2 | TMS |
| * 3 | 40 Ø₂:60 Me₂ | 3.5 (350) | 600 | 400 | 1.5 | TMS |
| 4 | 32 Ø₂:68 Me₂ | 0.32-0.6 (32-60) | 1000 | 300 | 3.2 | methoxy |
| 5 | 20 Ø₂:80 Me₂ | 1.9-2 (190-200) | 1700 | 1000 | 1.7 | TMS |
| 6 | 20 Ø₂:80 Me₂ | 1.7-2.5 (170-250) | - | - | - | TMS |
| * 7 | 15 Ø₂:85 Me₂ | 0.6 (60) | 650 | 100 | 6 | hydroxy |
| * 8 | 5 Ø₂:95 Me₂ | 1 (100) | 8450 | 750 | 11.6 | TMS |
| * 9 | 5 Ø₂:95 Me₂ | 1 (100) | 5700 | 1750 | 3.3 | TMS |
| * 10 | 100 ØMe | 5 (500) | 2600 | - | - | TMS |
| * 11 | 90 ØMe:10Me₂ | 5 (500) | 2600 | - | - | TMS |
| 12 | 50 ØMe:50Me₂ | 1.25 (125) | 2050 | 1100 | 1.9 | TMS |
| 13 | 50 ØMe:50Me₂ | 1.25 (125) | 2150 | 1300 | 1.6 | TMS |

| | | | | | | |
|---|---|---|---|---|---|---|
| ^{a} equilibrate of 3 | | | | | | |
| * comparative | | | | | | |

The blends of polyphenylene ether and phenylsiloxane were compression molded on a Carver press at 265-270°C for l.5-2 min at 2 tons pressure immediately following roll-mixing. The resulting 6.35cm x 12.7cm x 1.59mm (2.5" x 5" x l/l6") plaques had a wide range of transparencies. The plaques were cut into five 1.27cm x 12.7cm x 1.59mm (0.5" x 5" x l/l6") bars for UL-94 testing. The bars were aged at room temperature for three days before testing.

The char yield for all samples was measured by placing a 12.7mm x 19.05mm x 1.59 mm (l/2" x 3/4" x l/l6") (approximately 700 mg) specimen under a radiant heat panel (4.4 watts/cm²) and ignited after the sample was preheated for 20-30 seconds. The char volume was estimated by pushing the char through wire gauze shaped as a convex well (60mm diameter, 30mm deep) and placed atop a stainless steel beaker (60mm, 65 mm deep) whereby the char was reduced to a size no larger than lmm². The pre-weighed char was then poured into a volumetric centrifuge tube (l0ml) and centrifuged for l0 minutes. The volume was measured directly from the centrifuge tube and the volume per unit mass was calculated. The following results were obtained:

**TABLE 2**

| Phenyl-Siloxane Fluid | Level^{d} (phr) | Optical Clarity^{a} | UL-94 1.59mm (1/16") | Char Y (%) | Char V^{b} (ml/g) | Char Quality^{c} |
|---|---|---|---|---|---|---|
| None | - | clear | 7.6, V-1 | 30.6 | 4.5 | A |
| * 1 | 5 | clear | 4.4, V-0 | 33.0 | 4.0 | A |
| 2 | 5 | clear | 2.7, V-0 | 29.0 | 21.1 | B |
| 2 | 8 | clear | 2.1, V-0 | 25.7 | 24.1 | B |
| 2 | 15 | clear | 1.5, V-0 | 25.6 | 17.0 | B |
| * 3 | 5 | clear | 5.1, V-1 | 32.2 | ∼5 | A |
| 4 | 10 | transl. | - | 28.1 | 21.5 | B |
| 5 | 5 | transl. | 2.8, V-1 | 28.5 | 8.5 | C |
| 6 | 5 | transl. | 1.8, V-0 | 27.2 | 14.8 | C |
| * 7 | 5 | opaque | 5.5, V-1 | 27.9 | ∼5 | A |
| * 8 | 5 | opaque | 6.5, V-1 | 29.2 | 5.8 | A |
| * 9 | 5 | opaque | 5.8, V-1 | 30.6 | ∼5 | A |
| * 10 | 5 | clear | 2.8, V-0 | 28.6 | 10.2 | C |
| * 11 | 5 | clear | 3.7, V-0 | 28.9 | 10.5 | C |
| 12 | 5 | transl. | 2.5, V-0 | 28.4 | 19.5 | B |
| 13 | 5 | transl. | 1.6, V-0 | 29.7 | 21.5 | B |

| | | | | | | |
|---|---|---|---|---|---|---|
| * comparative | | | | | | |
| ^{a} Determined visually; "clear" is transparent and "transl." is translucent. | | | | | | |
| ^{b} Char volume is measured by method described above. | | | | | | |
| ^{c} A=hard, small, and brittle char; B=voluminous and spongy char; C=moderately voluminous and spongy char. | | | | | | |
| ^{d} Concentration in parts per hundred parts of polyphenylene ether. | | | | | | |

The above results show that blends of phenylsiloxane and polyphenylene ether possess valuable flame retardant properties. In addition a range of 20 to 40 mole % of diphenylsiloxy units or 40-80 mole % of methyl phenyl siloxy units can provide a satisfactory voluminous and spongy char which can serve as a protective layer for the underlying substrate during burning.

### Example 2

Blends of some of the phenylsiloxanes of Table 2 and commercially available polyphenylene ether (0.46IV) containing 2,6-dimethyl-1,4-phenylene ether units were made by adding the phenylsiloxane to polyphenylene ether powder in a Henschel mixer. The mixture was rapidly stirred and then dried for 4 hours at 80°C prior to extrusion.

The blends were extruded on a Welding Engineers 20 mm (W/E-20), counter-rotating, non-intermeshing, twin screw extruder. 15.24cm x 15.24cm x 1.59mm (6"x6"x1/16") OSU plaques were compression molded from extrudate using a Pasadena Hydrolics Inc. molder. Three plaques of each blend were tested in the horizontal configuration under a radiant heat load of 35 kW/m² and continuous measurements of rates of heat and smoke release, including peak rates of heat and smoke release (PRHR, PSRR), and total heat and smoke release (HTOT, STOT) were collected over a 300 sec (5 min) period according to standard OSU protocol (ASTM E906-83) and the results are listed in Table 3. UL-94 12.7cm x 12.7mm x 1.59mm (5"x1/2"x1/16" ) bars were injection molded from extrudate using a 28 ton Engel injection molding machine and the results are listed in Table 4.

UL-94 results from extruded/injection molded parts parallel those derived from roll mixing/compression molding.

**Table 3**

| Blend | Level (phr) | PRHR | HTOT 2 min | HTOT 5 min | PSRR | STOT 2 min | STOT 5 min |
|---|---|---|---|---|---|---|---|
| None | - | 321±12 | 230±25 | 444±16 | 691±57 | 473±52 | 644±48 |
| 2 | 5 | 136±11 | 81±16 | 346±20 | 336±67 | 160±32 | 371±49 |
| * 3 | 5 | 263±26 | 140±15 | 435±10 | 552±41 | 307±20 | 583±23 |
| 4 | 5 | 102±9 | 71±16 | 327±32 | 247±55 | 127±22 | 373±29 |
| 5 | 5 | 141±14 | 86±7 | 355±8 | 363±93 | 171±30 | 436±25 |
| * 9 | 5 | 200±8 | 120±50 | 419±27 | 544±56 | 288±121 | 593±37 |
| * 10 | 5 | 194±6 | 100±1 | 395±18 | 502±11 | 242±5 | 555±34 |
| 13 | 5 | 117±11 | 59±15 | 252±14 | 292±84 | 90±25 | 205±19 |

| | | | | | | | |
|---|---|---|---|---|---|---|---|
| * comparative | | | | | | | |

**Table 4**

| Additive | Level (phr) | Optical Clarity | Ave. 1st Burn (sec) | Ave. 2nd Burn (sec) | Range (sec) | Ave. FOT (sec)** | UL-94 Rating |
|---|---|---|---|---|---|---|---|
| None | - | Clear | 5.42 | 12.62 | 4.4-22.6 | 9.0 | V-1 |
| 2 | 5 | Clear | 1.92 | 1.00 | 0.8-2.6 | 1.5 | V-0 |
| ⁺ 3 | 5 | Clear | 5.24 | 6.80 | 2.5-14.1 | 6.0 | V-1 |
| 4 | 5 | Clear | 2.26 | 1.76 | 0.9-3.1 | 2.0 | V-0 |
| 5 | 5 | Translucent | 2.48 | 1.58 | 0.9-3.5 | 2.0 | V-0 |
| ⁺ 9* | 5 | Opaque | - | - | - | - | - |
| ⁺ 10 | 5 | Clear | 5.12 | 6.38 | 1.6-17.9 | 5.8 | V-1 |
| 13 | 5 | Clear | 1.68 | 1.24 | 0.8-2.5 | 1.5 | V-0 |

| | | | | | | | |
|---|---|---|---|---|---|---|---|
| *Not injection moldable | | | | | | | |
| ** Flame Out Time | | | | | | | |
| ⁺ comparative | | | | | | | |

The above results show that peak smoke release rate (PSRR) and total smoke (STOT) are clearly dependent on the type of phenylsiloxane used. The intumescing blends have significantly lower PSRR and STOT than non-intumescing materials. For example, 5phr blends 2, 4, 5, and 13 have 47-64% lower PSRR compared to the PPO control versus only 20-27% decreases for the non-intumescent blends 3, 9, and 10. Additionally, STOT at 5min for the intumescent blends 2, 4, 5, and 13 are between 32-68% less than the control whereas the non-intumescent blends 3, 9, and 10 have STOT only 8-14% less than the control.

## Claims

1. A method of improving flame retardance and reducing peak smoke release rate and total smoke of a polyphenylene ether which comprises blending the polyphenylene ether with 2-l5 parts by weight of a phenylsiloxane fluid per l00 parts of polyphenylene ether where the phenylsiloxane fluid has a weight average molecular weight in the range of from about 800 to l00,000 and consists essentially of chemically combined units of the formula,
(a) (C₆H₅)₂SiO
(b) CH₃(C₆H₅)SiO
(c) (CH₃)₂SiO
where there is present in the phenylsiloxane fluid from 20 to 40 mole % of (a), or 40 to 80 mole % of (b), or 21 to 79 mole % of the sum of (a) + (b), based on the total moles of (a), (b), and (c).

2. A method in accordance with claim l, where the polyphenylene ether is a poly(2,6-dimethyl-l,4-phenylene ether).

3. A method in accordance with claim l, where the phenylsiloxane fluid has 20 to 40 mole % of diphenylsiloxy units.

4. A method in accordance with claim l, where the phenylsiloxane fluid has 40 to 80 mole % of methylphenylsiloxy units.

## Patentansprüche

1. Verfahren zur Verbesserung der flammhemmenden Eigenschaft und Reduktion des Höchstwertes der Rauchfreisetzungsrate und des gesamten Rauches eines Polyphenylenäthers, welches das Mischen des Polyphenylenäthers mit 2 - 15 Gewichtsteilen eines Phenylsiloxanfluids pro 100 Teile des Polyphenylenäthers umfaßt, wobei das Phenylsiloxanfluid ein gewichtsgemitteltes Molekulargewicht im Bereich von etwa 800 - 100.000 aufweist und im wesentlichen aus chemisch verbundenen Einheiten der Formel
(a) (C₆H₅)₂SiO
(b) CH₃(C₆H₅)SiO
(c) (CH₃)₂SiO
besteht, wobei in dem Phenylsiloxanfluid 20 - 40 Mol-% von (a) oder 40 - 80 Mol-% von (b) oder 21 - 79 Mol-% der Summe von (a) + (b), bezogen auf die gesamten Mole von (a), (b) und (c), vorhanden sind.

2. Verfahren nach Anspruch 1, worin der Polyphenylenäther ein Poly(2,6-dimethyl-1,4-phenylenäther) ist.

3. Verfahren nach Anspruch 1, worin das Phenylsiloxanfluid 20 - 40 Mol-% der Diphenylsiloxyeinheiten aufweist.

4. Verfahren nach Anspruch 1, worin das Phenylsiloxanfluid 40 - 80 Mol-% der Methylphenylsiloxyeinheiten aufweist.

## Revendications

1. Procédé d'amélioration de la résistance au feu et de réduction de la vitesse maximale de libération de fumée et la quantité totale de fumée d'un poly(phénylène éther), lequel procédé consiste à mélanger le poly(phénylène éther) avec 2 - 15 parties en poids d'un fluide de phénylsiloxane pour 100 parties de poly(phénylène éther), le fluide phénylsiloxane ayant une masse moléculaire moyenne en poids comprise entre environ 800 et environ 100 000 et étant constitué essentiellement de motifs chimiquement liés répondant aux formules
(a) (C₆H₅)₂SiO
(b) CH₃(C₆H₅)SiO
(c) (CH₃)₂SiO,
et dans lequel le fluide phénylsiloxane contient de 20 à 40 % en moles de (a), ou de 40 à 80 % en moles de (b) ou de 21 à 79 % en moles de la somme de (a) et de (b) par rapport au nombre de moles total de (a), (b) et (c).

2. Procédé conforme à la revendication 1 dans lequel le poly(phénylène éther) est un poly(2,6-diméthyl-1,4-phénylène éther).

3. Procédé conforme à la revendication 1 dans lequel le fluide phénylsiloxane contient de 20 à 40 % en moles de motifs diphénylsiloxy.

4. Procédé conforme à la revendication 1 dans lequel le fluide phénylsiloxane contient de 40 à 80 % en moles de motifs méthylphénylsiloxy.
